(19) **Europäisches Patentamt**

**European Patent Office**

**Office européen des brevets**

(11) **EP 1 185 580 B1**

(12) **EUROPEAN PATENT SPECIFICATION**

(45) Date of publication and mention
of the grant of the patent:
**17.12.2003 Bulletin 2003/51**

(51) Int Cl.⁷: **C08J 5/18**, B41M 5/00,
D06P 5/30, D01F 1/10,
D01F 6/04, D01F 6/06,
C08K 5/00

(21) Application number: **99925676.1**

(22) Date of filing: **19.05.1999**

(86) International application number:
**PCT/US99/11053**

(87) International publication number:
**WO 0006/9950 (23.11.2000 Gazette 2000/47)**

(54) **PRINTING OF OLEFINIC SUBSTRATES COMPRISING A NON-IONIC FLUOROCHEMICAL SURFACTANT**

DRUCKEN VON OLEFINISCHEN SUBSTRATEN ENTHALTEND EIN NICHTIONISCHES FLUORIERTES TENSID

IMPRESSION DE SUBSTRATS OLEFINIQUES COMPRENANT UN COMPOSE FLUORE TENSIOACTIF NON IONIQUE

(84) Designated Contracting States:
**BE DE FR GB**

(43) Date of publication of application:
**13.03.2002 Bulletin 2002/11**

(73) Proprietor: **3M Innovative Properties Company
St. Paul, MN 55133-3427 (US)**

(72) Inventors:
• **GOEMAN, Bart
B-9140 Steendorp/Temse (BE)**
• **KLUN, Thomas, P.
Lakeland, MN 55043 (US)**
• **MIN, Seungbae
Sungnam-si Kyonggi-do (KR)**

(74) Representative: **Voortmans, Gilbert J.L. et al
3M Europe S.A.,
Hermeslaan 7
1831 Diegem (BE)**

(56) References cited:
**EP-A- 0 693 587        EP-A- 0 761 460
WO-A-97/44508        US-A- 5 084 340**

• **DATABASE WPI Section Ch, Week 199437
Derwent Publications Ltd., London, GB; Class
A14, AN 1994-299912 XP002130391 & JP 06
228359 A (NITTO DENKO CORP), 16 August 1994
(1994-08-16)**

## Description

### Field of the Invention

The present invention relates to an improvement in printing of a non-woven web or microporous film of an olefinic thermoplastic polymer. In particular, the improvement involves the addition of a non-ionic fluorochemical surfactant.

### Background of the Invention

Thermoplastic polymers, especially olefinic polymers such as polypropylene, are widely employed to create a variety of substrates, including non-woven fibrous webs and microporous films. In many applications, these substrates need to be provided with printed information such as text and images, including color images. Often, this printed information is provided thereon via ink printing, in particular via inkjet printing. Unfortunately, the aforementioned thermoplastic polymer substrates, when printed in this way, suffer from a number of disadvantages. For example, the appearance of the image may be poor as a result of bleeding of colors and/or coalescence of colors. Furthermore, some inks suffer from slow drying and some may only dry superficially without completely drying throughout within acceptable times. Though these problems are especially noticeable when the ink used is an aqueous based ink, they are not exclusively observed with aqueous based inks. Accordingly, there is a need for a solution that can provide these thermoplastic polymer substrates with improved printability properties.

To modify the surface of thermoplastic olefinic substrates it is known in the art to apply a surface treatment such as corona discharge thereto or to topically apply a hydrophilicity imparting agent as is described in for example GB 1 337 467.

It is further known in the art to modify the surface properties of a thermoplastic polymer by adding a compound during the extrusion of the thermoplastic polymer.

WO 92/18569 and WO 95/01396 describe fluorochemical additives for use in the extrusion of thermoplastic polymers to prepare films and fibers with repellency properties. It is specifically disclosed that films can be prepared with good anti-wetting properties. It is further taught that polypropylene films with the fluorochemical dispersed therein have good antistatic properties.

Furthermore, the addition of one or more surfactants to the melts of thermoplastic polymers to impart hydrophilicity to both the surface and the bulk of the fiber is also taught in the art. U.S. Pat. Nos. 4,857,251 and 4,920,168 (Nohr et al.) describe a method of forming fibers by melt-extrusion of a surface segregatable thermoplastic composition that comprises thermoplastic polymer and siloxane-containing additive having certain moieties. After the fibers are formed, they are heated from 27°C to 95°C. for a period of time sufficient to increase the amount of additive at the fiber surface. The resulting fibers exhibit increased surface hydrophilicity compared to fibers prepared from the thermoplastic alone.

U.S. Pat. No. 5,087,520 (Suzuki et aL) describes fibers useful as surface materials for paper, diapers, sanitary napkins, incontinence products, etc. comprising a polyolefin or polyester having a mixture of a fatty acid diethanolamide, a polyether-modified silicone, a sorbitan fatty acid ester and a metal salt of an alkylsulfonate.

US 5,804,625 (Temperante et al.) discloses the addition to the polymer melt of a blend of one or more non-ionic fluorochemical surfactants and one or more non-ionic, non-fluorinated, polyoxyethylene group containing surfactants to impart durable hydrophilicity to the surface of an article extruded from the polymer. Particular articles that can be produced and provided with durable hydrophilicity at the surface include fibers, fabrics and films.

EP 0 516 271 discloses the use of a fluoroaliphatic group containing non-ionic compound in the extrusion of polypropylene fibers to impart durable wettability properties to the fiber's surface. Particularly exemplified compounds are those that have a perfluorinated alkyl group linked to a poly(oxyalkylene) group terminated with a hydroxyl group or a lower alkyl ether.

However, none of the above listed prior art addresses the problem of printability of non-woven webs and microporous films of polyolefinic thermoplastic polymers. Accordingly, the present invention seeks to improve the printability of such substrates and in particular to reduce color bleeding, color coalescence and/or dry time.

### Summary of Invention

The present invention provides a method of printing a substrate comprising the steps of:

- providing a substrate selected from the group consisting of (i) a non-woven web comprising fibers of olefinic thermoplastic polymer having dispersed therein a non-ionic fluorochemical surfactant and (ii) a microporous film comprising a layer of olefinic thermoplastic polymer having dispersed therein a non-ionic fluorochemical surfactant and;

- image-wise applying ink to said substrate,

and the olefinic thermoplastic polymer being a polymer consisting of repeating units derived from alpha olefins having 2 to 4 carbon atoms.

Due to the fluorochemical surfactant which is dispersed in the olefinic thermoplastic polymer, improved printability of the microporous film and non-woven web is observed. For example, with the non-woven web, improved drying characteristics are observed, color bleeding is minimized and coalescence is substantially avoided. With the microporous films, less color bleeding and ink coalescence is observed while good drying characteristics are maintained.

It will be understood that in connection with the present invention the use of the term "dispersed therein" denotes merely the presence of the non-ionic fluorochemical surfactant in the thermoplastic polymer without limitation as to where the non-ionic fluorochemical surfactant is located. Thus the non-ionic fluorochemical surfactant may be uniformly dispersed in the bulk of the polymer or a major portion of the non-ionic fluorochemical surfactant may have migrated to the surface of the thermoplastic polymer layer or fiber.

The non-ionic fluorochemical surfactant is typically dispersed in the thermoplastic olefinic polymer by adding it to the polymer melt of the olefinic polymer prior to extruding the fibers of the non-woven web or prior to extruding the precursor of the microporous film.

In connection with the present invention there is also provided a microporous film comprising a layer of olefinic thermoplastic polymer having dispersed therein a non-ionic fluorochemical surfactant wherein the olefinic thermoplastic polymer is a polymer consisting of repeating units derived from alpha olefins having 2 to 4 carbon atoms.

## Detailed description of the Invention

As used herein, the terms "fiber" and "fibrous" refer to particulate matter, generally thermoplastic resin, wherein the length to diameter ratio of the particulate matter is greater than or equal to about 10. Fiber diameters may range from about 0.5 micron up to at least 1,000 microns. Each fiber may have a variety of cross-sectional geometries, may be solid or hollow, and may be colored by, e.g., incorporating dye or pigment into the polymer melt prior to extrusion.

The non-woven webs of fibers of thermoplastic olefinic polymer for use in this invention include non-woven webs manufactured by any of the commonly known processes for producing non-woven webs. For example, the fibrous non-woven web can be made by spunbonding techniques or melt-blowing techniques or combinations of the two. Spunbonded fibers are typically small diameter fibers which are formed by extruding molten thermoplastic polymer as filaments from a plurality of fine, usually circular capillaries of a spinneret with the diameter of the extruded fibers being rapidly reduced. Meltblown fibers are typically formed by extruding the molten thermoplastic material through a plurality of fine, usually circular, die capillaries as molten threads or filaments into a high velocity, usually heated gas (e.g. air) stream which attenuates the filaments of molten thermoplastic material to reduce their diameter. Thereafter, the meltblown fibers are carried by the high velocity gas stream and are deposited on a collecting surface to from a web of randomly disbursed meltblown fibers. Any of the non-woven webs may be made from a single type of fiber or two or more fibers which differ in the type of thermoplastic olefinic polymer and/or thickness.

Further details on the manufacturing method of non-woven webs of this invention may be found in Wente, Superfine Thermoplastic Fibers, 48 INDUS. ENG'G CHEM. 1342(1956), or in WENTE ET AL., MANUFACTURE OF SUPERFINE ORGANIC FIBERS, (Naval Research Laboratories Report No. 4364, 1954).

The microporous films of the present invention have a structure that enables fluids to flow through them. The effective pore size is at least several times the mean free path of the flowing molecules, namely form several micrometers down to about 100 Angstroms. Such sheets are generally opaque, even when made of transparent material, because the surfaces and the internal structure scatter visible light.

There are several methods known in the art to prepare a microporous film. A preferred method for producing the microporous films of the present invention utilizes the phase separation phenomenon which utilizes either liquid-liquid or solid-liquid phase separation. The method for producing microporous structures using these techniques usually involves melt blending the polymer with a compatible liquid that is miscible with the polymer at the casting or extrusion temperature, forming a shaped article of the melt blend, and cooling the shaped article to a temperature at which the polymer phase separates from the compatible liquid. Microporosity can be imparted to the resultant structure by, for example, (i) orienting the structure in at least one direction; (ii) removing the compatible liquid and then orienting the structure in at least one direction; or (iii) orienting the structure in at least one direction and then removing the compatible liquid. The cooling step for films is usually accomplished by contacting the film with a chill roll. This results in a thin skin being formed on the side of the film which contacts the chill roll, which results in a decrease in the fluid flow through the film. Such methods are described, for example, in U.S. Pat. Nos. 4,247,498 (Castro), 4,539,256 (Shipman), 4,726,989 (Mrozinski) and 4,867,881 (Kinzer). Particulate-filled microporous films such as those described in, for example, U.S. Pat. Nos. 4,777,073 (Sheth), 4,861,644 (Young et al.), and 5,176,953 (Jacoby et al.), as well as JP 61-264031 (Mitsubishi Kasei KK), can also be utilized. Microporosity can be imparted to such particulate-filled films by, for example, orienting the film in at least one direction. To produce the microporous film of the present invention having the non-ionic fluorochemical surfactant dispersed therein, the non-ionic fluorochemical surfactant is typically added to the aforementioned melt blend.

In accordance with the present invention, one or more non-ionic fluorochemical surfactants are added to the melt of the olefinic thermoplastic polymer so as to disperse the non-ionic fluorochemical surfactant(s) within the fibers or microporous film produced from the olefinic thermoplastic polymer.

Particularly useful non-ionic fluorochemical surfactants include fluoroaliphatic group-containing nonionic compounds that contain one or more blocks of water-solubilizing polyoxyalkylene groups in their structures. Generally, the fiuorochemical surfactants useful in the invention include those represented below by Formula I:

$$(R_f)_n\text{-}Q\text{-}(Z)_m \tag{I}$$

wher ein:

each $R_f$ may be the same or different and represents a fluoroaliphatic group having at least 3 and preferably at least 4 fully-fluorinated carbon atoms that may be straight-chained, branched, or, if sufficiently large, cyclic, or any combination thereof. The skeletal chain in the fluoroaliphatic radical can include one or more catenary heteroatoms, such as oxygen, hexavalent sulfur, and trivalent nitrogen atoms bonded only to carbon atoms of the skeletal chain. Fully fluorinated fluoroaliphatic groups are preferred, but hydrogen or chlorine atoms may be present as substituents, as long as no more than one of either atom is present for every two carbon atoms. While $R_f$ can contain a large number of carbon atoms, compounds where $R_f$ has no more than 20 carbon atoms will be adequate and preferred since larger flubroaliphatic radicals usually represent a less efficient utilization of the fluorine than is possible with shorter fluoroaliphatic radicals. Fluoroaliphatic radicals containing from about 6 to about 12 carbon atoms are most preferred. Generally, $R_f$ will contain between about 40 and about 78 weight percent fluorine. The terminal portion of the $R_f$ group preferably contains at least four fully fluorinated carbon atoms, e.g., $CF_3CF_2CF_2CF_2$--, and particularly preferred compounds are those in which the $R_f$ group is fully or substantially completely fluorinated, as in the case where $R_f$ is a perfluoroalkyl, e.g., $CF_3(CF_2)_i$--. Suitable $R_f$ groups include, for example, $C_8F_{17}$--, $C_6F_{13}$--, $C_4F_9$-- and $C_{10}F_{21}$--.

Q in Formula I above is a multivalent, generally divalent, linking group, or is a covalent bond, that provides a means to link the group or groups $R_f$ with the depicted group or groups Z, which is a nonionic, water-solubilizing group; Q can comprise an alkylene group, e.g., --$C_{n'}H_{2n'}$--or -$CH_2CH(OH)CH_2$--,); Q can comprise a heteroatom-containing group, e.g., a group such as -S-, --O--, --CO--, --$SO_2$--, or --N(R)--(where R is a hydrogen or a $C_1$ to $C_6$ substituted or unsubstituted alkyl group that may comprise a catenary heteroatom such as O, N or S); or Q can comprise a combination of such groups such as would give, for example, --$CON(R)C_{n'}H_{2n'}$--, --$SO_2N(R)C_{n'}H_{2n'}$--, --$CH_2CH_2SO_2N(R)C_{n'}H_{2n'}$--, --$SO_3C_6H_4N(R)C_{n'}H_{2n'}$---, --$SO_2N(R)C_jH_{2j}O[CH_2CH(CH_2Cl)O]_gCH_2Cl)$--($CH_2Cl$)-- (n' = 1 to 6; g = 1 to 10), --$SO_2N(CH_3)C_2H_4OCH_2CH(OH)CH_2$--, --$SO_2N(C_2H_5)C_2H_4OCH_2CH(OH)CH_2$--, --$SO_2N(H)CH_2CH(OH)CH_2NHCH(CH_3)CH_2$--, --$(CH_2)_2S(CH_2)_2$--, and --$(CH_2)_4SCH(CH_3)CH_2$--;

each Z in Formula I above may be the same or different and represents a nonionic, water-solubilizing group comprising a poly(oxyalkylene) group, $(OR')_x$, where R' is an alkylene group having from 2 to about 4 carbon atoms, such as --$CH_2CH_2$--, --$CH_2CH_2CH_2$--, --$CH(CH_3)CH_2$--, and --$CH(CH_3)CH(CH_3)$--, and x is a number between about 6 and about 20; Z preferably contains a poly(oxyethylene) group. The oxyalkylene units in said poly(oxyalkylene) can be the same, such as in poly(oxypropylene) or poly(oxyethylene), or can be present as a mixture, such as in a heteric straight or branched chain of randomly distributed oxyethylene and oxypropylene units, i.e., poly(oxyethylene-co-oxypropylene), or as in straight or branched chain blocks of oxypropylene units. The poly(oxyalkylene) chain can be interrupted by or include one or more catenary linkages, providing such linkages do not substantially alter the water-solubilizing character of the poly(oxyalkylene) chain. The Z group may be terminated for example with a hydroxyl, lower alkyl ether, alkaryl ether, or fluoroalkyl ether; and n and m independently represent a number from 1 to 6. Preferably, n and m are 1.

A preferred subclass of the non-ionic fluorochemical compounds according to formula (I) for use in this invention corresponds to formula (II):

$$R_f\text{-}L\text{-}G\text{-}X\text{-}T \tag{II}$$

wherein $R_f$ has the meaning as described above; L either is a divalent linking group such as, for example, one of the divalent linking groups mentioned above for Q or is a covalent bond; G is a water solubilizing poly(oxyalkylene) group; X is oxygen or NR, with R representing hydrogen or an alkyl or aryl group; and T is hydrogen or an organic group, preferably an organic group having not more than 6 carbon atoms.

Specific examples of non-ionic fluorochemical surfactants for use in the invention include:

$C_8F_{17}SO_2N(C_2H_5)CH_2CH_2(OCH_2CH_2)_{7.2}OCH_3$
$C_8F_{17}SO_2N(CH_3)CH_2CH_2(OCH_2CH_2)_{7.2}OCH_3$
$C_8F_{17}SO_2N(CH_3)CH_2CH_2(OCH_2CH_2)_{8.5}OC_4H_9$
$C_8F_{17}SO_2N(CH_3)CH_2CH_2(OCH_2CH_2)_{8.5}OC_6H_{13}$
$C_8F_{17}SO_2N(CH_3)CH_2CH_2(OCH_2CH_2)_{10}OC_8H_{17}$
$C_8F_{17}SO_2N(CH_3)CH_2CH_2(OCH_2CH_2)_{10}OC_{10}H_{21}$
$C_8F_{17}SO_2N(CH_3)CH_2CH_2(OCH_2CH_2)_{9.5}OC_6H_5$
$C_8F_{17}SO_2N(CH_3)CH_2CH_2(OCH_2CH_2)_{9.5}OC_{14}H_{29}$
$C_8F_{17}SO_2N(CH_3)CH_2CH_2(OCH_2CH_2)_{10}OC_6H_4\text{-}C_8H_{17}$
$C_8F_{17}SO_2N(C_2H_5)CH_2CH_2(OCH_2CH_2)_9OCH_2CH_3$
$C_7F_{15}SO_2N(CH_3)CH_2CH_2(OCH_2CH_2)_7(OCH_2CH(CH_3))_4OH$
$C_8F_{17}SO_2N(C_2H_5)CH_2CH_2NHCH_2CH_2(OCH_2CH_2)_9NHC(O)\text{-}CH_3$
$F(CF_2CF_2)_nCH_2CH_2O(CH_2CH_2O)_xH$

wherein the above formula represents a mixture of compounds wherein n has a value of 2 to 6 and the average is 4 and x is about 14;

Fluoroaliphatic group-containing non-ionic fluorochemical surfactants, including those depicted supra by Formula I and II, may be prepared using known methods including those methods described in U.S. Pat. No. 2,915,554 (Albrecht et al.). The Albrecht patent discloses the preparation of fluoroaliphatic group-containing nonionic compounds from active hydrogen-containing fluorochemical intermediates, such as fluoroaliphatic alcohols, acids, and sulfonamides by reaction of the intermediates with, for example, ethylene oxide.

Analogous compounds may be prepared by treating the fluorochemical intermediate with propylene oxide. The fluoroaliphatic oligomers disclosed in U.S. Pat. No. 3,787,351 (Olson), and certain fluorinated alcohol-ethylene oxide condensates described in U.S. Pat. No. 2,723,999 (Cowen et al.) are also considered useful. Fluoroaliphatic group-containing nonionic surfactants containing hydrophobic long chain hydrocarbon groups may be prepared by reacting a fluoroaliphatic epoxide, with, for example, an ethoxylated alkylphenol or alcohol, respectively, in the presence of $BF_3$ etherate. They may also be prepared by first converting the ethoxylated alkylphenol or alcohol to a chloride by reaction with thionyl chloride, then reacting the resulting chloride with a fluoroaliphatic sulfonamide containing an active hydrogen, in the presence of sodium carbonate and potassium iodide.

In accordance with a particular embodiment of the present invention, there may further be dispersed a non-fluorochemical non-ionic polyoxyalkylene surfactant (hereinafter hydrocarbon surfactant) in the thermoplastic olefinic polymer. Preferably, the hydrocarbon surfactant corresponds to the following formula:

$$R_h^1\text{-}Y^1\text{-}W\text{-}Y^2\text{-}R_h^2 \tag{III}$$

wherein:

W represents a polyoxyalkylene group, preferably a polyoxyethylene group;

$Y^1$ and $Y^2$ independently represent an oxygen or sulfur atom or a group of the formula -CO-, -COO-, -NH-, -CONH-, or -N(R)-, where R is an alkyl group or an aryl group;

$R_h^1$ represents an alkyl or an aryl group, or a combination thereof, that may be substituted or unsubstituted and that contains from 2 to about 20 carbon atoms whose skeletal chain may be straight-chained, branched, or, if sufficiently large, cyclic, or any combination thereof the skeletal chain can also optionally include one or more catenary heteroatoms (such as oxygen, hexavalent sulfur, and trivalent nitrogen atoms) bonded to the carbon atoms of the skeletal chain, and

$R_h^2$ represents a hydrogen atom or is an alkyl or an aryl group, or a combination thereof that may be substituted or unsubstituted and that contains from 2 to about 20 carbon atoms whose skeletal chain may be straight-chained, branched, or, if sufficiently large, cyclic, or any combination thereof, the skeletal chain can also optionally include one or more catenary heteroatoms such as oxygen, hexavalent sulfur, and trivalent nitrogen atoms bonded to the carbon atoms of the skeletal chain.

The variable W in the hydrocarbon surfactants according to the above formula III is a polyoxyalkylene group $(OR')_s$, where R' is an alkylene group having from 2 to about 4 carbon atoms, such as $--CH_2CH_2--$, $--CH_2CH_2CH_2--$, $--CH(CH_3)CH_2--$, and $--CH(CH_3)CH(CH_3)--$, and s is a number such that the weight percent of oxyalkylene units in the hydrocarbon surfactant is between 20 and 80 percent and more preferably between 40 and 70 weight percent. The oxyalkylene units in the poly(oxyalkylene) group can be the same, such as in poly(oxypropylene) or poly(oxyethylene), or present as a mixture, such as in a heteric straight or branched chain of randomly distributed oxyethylene and oxypropylene units i.e., poly(oxyethylene-co-oxypropylene), or as in a straight or branched chain blocks of oxypropylene units.

Representative hydrocarbon surfactants according to Formula III above include ethoxylated alkylphenols (such as the TRITON™ TX, IGEPAL™ CA and IGEPAL™ CO series, commercially available from Union Carbide Corp. and Rhone-Poulenc Corp. respectively), ethoxylated dialkylphenols (such as the IGEPAL™ DM series, also commercially available from Rhone-Poulenc Corp.), ethoxylated fatty alcohols (such as the TERGITOL™ series, commercially available from Union Carbide Corp.) and polyoxyethylene fatty acid mono-esters and diesters (such as the MAPEG™ MO and MAPEG™ DO series, commercially available from PPG Industries, Inc.).

When one or more non-ionic fluorochemical surfactants are blended with one ore more hydrocarbon surfactants the weight ratio of non-ionic fluorochemical surfactant(s) to hydrocarbon surfactants(s) is typically from 9:1 to 4:6, preferably from 9:1 to 1:1, more preferably from 9:1 to 6:4.

The olefinic thermoplastic polymer used to produce the non-woven web or microporous film of the present invention is a poly(alpha)olefin consisting of repeating units derived from mono-1-olefins (alpha olefins) having 2 to 4 carbon atoms. The monomers that can be employed to produce the thermoplastic olefinic polymer for use in this invention include ethylene, propylene and butene-1, alone, or in admixture, or in sequential polymerization systems.

Examples of suitable polymers include polyethylene, the presently preferred polypropylene, propylene/ethylene copolymers, polybutylene and blends thereof. Processes for preparing these polymers are well known, and the invention is not limited to a polymer made with a particular catalyst or process.

The non-ionic fluorochemical surfactant or blend thereof with a hydrocarbon surfactant is typically added to the melt of the olefinic polymer prior to extrusion and is typically added in an amount of at least 0.2% by weight based on the weight of the thermoplastic olefinic polymer and more preferably in an amount of at least 0.5% by weight. The maximum amount of the non-ionic fluorochemical surfactant is not critical; however, it is preferred not to use excessive amounts so as to not impair the mechanical properties of the microporous film or the fibers of the non-woven web. Generally, the amount of non-ionic fluorochemical surfactant or blend with a hydrocarbon surfactant is between 0.3% by weight and 10% by weight, more preferably between 0.5% by weight and 6% by weight based on the weight of the thermoplastic olefinic polymer.

When nonwoven webs or microporous films are prepared containing less than 2.0 weight percent of the non-ionic fluorochemical surfactant or blend thereof with the hydrocarbon surfactant, the non-ionic fluorochemical surfactant or blend is conveniently incorporated into the polymer by tumble blending the non-ionic fluorochemical surfactant or blend with polymer pellets prior to extrusion or by metering liquid non-ionic fluorochemical surfactant or blend into the extruder hopper along with the polymer pellets during extrusion. When greater than about 2.0 weight percent of non-ionic fluorochemical surfactant or blend is used, it is preferable to inject the non-ionic fluorochemical surfactant or blend into the molten polymer stream under high pressure either in the extruder barrel or immediately as the melt stream exits the extruder and before it enters the extrusion die. For convenience, a "master batch" or superconcentrate of non-ionic fluorochemical surfactant or blend thereof with a hydrocarbon surfactant in thermoplastic olefinic polymer can be made (e.g., thermoplastic olefinic polymer containing 5-30 weight percent of the non-ionic fluorochemical surfactant or blend which was melted and extruded into pellets) and added to the remaining thermoplastic olefinic polymer before the extrusion process.

In accordance with the method of the present invention, the non-woven web or the microporous film is provided in an image-wise fashion with ink. By the term "image-wise applying" in connection with the invention is meant that an ink pattern is applied representing information such as signs, graphs, drawings, images, text or any combination thereof. The ink that is applied to the non-woven web or the microporous film can be any type of ink commonly used in the art. For example, the ink can be aqueous based as well as solvent based. Further, the ink may be based on dyes that are dissolved in the ink or that are present in the ink as finely dispersed pigments. The image-wise application of the ink on the substrates of the invention conveniently proceeds by means of an inkjet printer. Commercially available inkjet printers that can be used in connection with the invention include for example the Hewlett Packard printers HP 855 desk jet, HP 870 desk jet, HP 2000c desk jet, HP 2500 Design Jet and the Encad printers Novajet IV and Novajet Pro.

The invention is further illustrate by means of the following examples without the intention to limit the invention thereto.

EXAMPLES

All percentages shown in the examples and test methods which follow are by weight unless otherwise specified.

GLOSSARY

Fluorochemical Surfactants

**FC-1:** 3M™ FC-1802 Protective Chemical, a hydrophilic melt additive for nonwovens, available from 3M Co., St. Paul, Minnesota.

**FC-2:** This fluorochemical is the reaction product of MeFOSA ($C_8F_{17}SO_2NH_2$) with GENAPOL™ 26-L-80, prepared as described for Fluoroaliphatic Group-containing Nonionic Compound F-21 in U.S. Pat. No. 5,804,625. GENAPOL™ 26-L-80 is nominally $C_{12-16}H_{25-33}(OCH_2CH_2)_{9.5}OH$, available from Clariant Corp., Charlotte, North Carolina.

**FC-3:** This fluorochemical is the reaction product of MeFOSA with ALFONIC™ 6-8.5, prepared as described for Fluoroaliphatic Group-containing Nonionic Compound F-21 in U.S. Pat. No. 5,804,625, except that an equimolar amount of ALFONIC™ 6-8.5 was substituted for the GENAPOL™ 26-L-80. ALFONIC™ 6-8.5 is nominally $C_6H_{13}$ $(OCH_2CH_2)_{8.5}OH$, available from Condea Vista Chemical Co., Houston, Texas.

**FC-4:** This fluorochemical is the reaction product of MeFOSA with CARBOWAX™ 350, prepared as described for Fluoroaliphatic Group-containing Nonionic Compound F-18 in U.S. Pat. No. 5,804,625 at col. 12, except that an equimolar amount of CARBOWAX™ 350 was substituted for TRITON™ X-100. CARBOWAX™ 350 is nominally polyethylene glycol 350 monomethyl ether, available from Union Carbide Corp., Danbury, Connecticut.

Non-Fluorochemical Surfactants

**HC-1:** GENAPOL™ UD080 surfactant, an oxo alcohol polyglycol ether, available from Clariant Corp.

**HC-2:** TRITON™ X-100 surfactant, ethoxylated (9.5) octylphenol, available from Union Carbide Corp, Danbury, Connecticut.

**HC-3:** NUWET™ 500 silicone surfactant, available from OSI Specialties, Inc., Danbury, Connecticut.

Thermoplastic Polymers

**PP3505:** ESCORENE™ PP3505 polypropylene, having a 400 melt index flow rate, available from Exxon Chemical Co., Baytown, Texas.

**P(EO)6806:** ASPUN™ 6806 poly(ethylene/octene), having a melt index of 105 g/10 min (as measured by Test Method ASTM D-1238) and having a peak melting point of 124.8°C, available from Dow Chemical Co., Midland, Michigan.

**5D45:** polypropylene, having a melt index of 0.6 dg/min (available from Union Carbide Corp.)

Miscellaneous

**MILLAD™ 3905** nucleating agent - available from Milliken Chemical Co., New York, New York.

**USP #31 mineral oil -** available from Amoco Petroleum Products, Oak Brook, Illinois.

TEST METHODS

Melt-Blown Éxtrusion Procedure

The melt-blown extrusion procedure used was the same as described in U.S. Pat. 5,300,357, column 10. The extruder used was a Brabender 42 mm conical twin screw extruder, with maximum extrusion temperature of 270-280°C and distance to the collector of 12 inches (30 cm). Fluorochemical surfactant (with optional hydrocarbon surfactant) and thermoplastic polymer mixtures were mixed by blending the surfactant(s) and thermoplastic polymer in a paperboard container using a mixer head affixed to a hand drill for about one minute until a visually homogeneous mixture was obtained. The process condition for each mixture was the same, including the melt blowing die construction used to blow the microfiber web. The basis weight of the resulting web, unless otherwise stated, was 100 = 5 g/m² (GSM), and the desired diameter of the microfibers was 5-18 micrometers. Unless otherwise stated, the extrusion temperature was 270-280°C, the primary air temperature was 210°C, the pressure was 124 kPa (18 psi), with a 0.076 cm air gap width, and the polymer throughput rate was about 180 g/hr/cm.

Microporous Film Preparation Procedure

**Control Microporous Film (No Additive) -** About 64.9% 5D45 polypropylene and about 0.1% MILLAD™ 3905 nucleating agent were melt mixed with 35% USP #31 mineral oil on a 40 mm twin screw extruder operated at a throughput rate of 11.8 kg/hour and at a decreasing temperature profile of 270°C to 216°C. The melt mix was extruded through a 38 cm x 0.38 mm sheeting die and then was cast onto a patterned casting wheel maintained at 56°C. The resulting film was first stretched at a ratio of 1.25:1 at 52°C in the length direction, then stretched at a ratio of 1.65:1 at 107°C in the transverse direction, and finally heat set at a temperature of 132°C for 10 seconds. The resulting microporous film had an average pore size of 0.60 microns and thickness of 0.18 mm.

**Microporous Film Made with Fluorochemical Surfactant Polymer Melt Additive -** Essentially the same process and raw materials were employed as described in the preparation of the control microporous film, except this time 1.2% of fluorochemical surfactant FC-4 was added to the polypropylene/nucleating agent/oil blend prior to extrusion. In addition, the nucleator concentration was increased from 0.1% to 0.22%. The resulting microporous film had an average pore size of 0.17 microns and thickness of 0.18 mm.

**Microporous Film Made with Hydrocarbon Surfactant Polymer Melt Additive -** Essentially the same process and raw materials were employed as described in the preparation of the control microporous film, except this time 0.6% of hydrocarbon surfactant HC-2 was added to the polypropylene/nucleating agent/oil blend prior to extrusion. In addition, the nucleating agent concentration was increased from 0.1% to 0.22%. The resulting microporous film had an average pore size of 0.17 microns and thickness of 0.18 mm.

**Microporous Film with a Blend of Fluorochemical and Hydrocarbon Surfactant Polymer Melt Additives -** Essentially the same process and raw materials were employed as described in the preparation of the control microporous film, except this time 0.5% each of fluorochemical surfactant FC-4 and hydrocarbon surfactant HC-2 were added to the polypropylene/nucleating agent/oil blend prior to extrusion. In addition, the nucleating agent concentration was increased from 0.1% to 0.20%. The resulting microporous film had an average pore size of 0.95 microns and thickness of 0.18 mm.

Printing of Substrates

Substrates (nonwovens webs or microporous films) were each attached to a paper backing and then were passed through a test printer. Each substrate was given a three-color print with symmetrically overlapping, same-sized solid circles of yellow, magenta and cyan ink. In this way, separate inked areas were provided for yellow, magenta and cyan (primary colors), overlapping print areas for the two-color combinations of yellow with magenta, yellow with cyan and magenta with cyan (secondary colors), and a doubly overlapping print area for the three-color combination of yellow, magenta and cyan (tertiary color - theoretically black). The printed substrate was then observed or tested for bleed, coalescence and ink dry time (surface and total), according to the test procedures described below.

Bleed

Bleed is a measurement of the degree of ink feathering/bleeding/flooding noted on the surface of the printed substrate. Feathering and bleeding are terms used to describe the spreading of one ink color onto another. Flooding is the term used to describe the situation where the printed substrate is unable to hold the amount of ink being jetted, thus causing running or spilling of one color onto another. All of these terms describing ink bleeding have been taken into account in the following 4-point rating scale:

1 - GOOD - no bleeding, feathering or flooding noted (inks stays in original printed location)
2 - FAIR - secondary color feathering or bleed (ink boundaries become indistinct)
3 - POOR - secondary color flooding (ink shows some running over surface)
4 - SEVERE - primary bleeding and secondary flooding (severe ink bleeding and running)

Uniformity

Uniformity is a measurement of the ink density on the printed substrate. It is desirable that the ink uniformly wet the substrate and not exhibit any significant degree of coalescence, beading, mottling and/or mud-cracking. Coalescence and beading are terms used to describe the situation where the ink does not properly wet the media, causing the ink to pool together in bead-like forms. Mud-cracking is a term to describe when the ink exhibits cracking or splitting from the substrate surface, with substrate showing between the ink cracks. Mud-cracking is often a result of receptor or ink film shrinkage or possibly pigment agglomeration during drying. Mottling is a term used to describe the appearance of a non-uniform blotchy image, often caused by receptor absorbency variations across the printed areas. Factors adversely affecting ink uniformity include receptor coating thickness variations and contamination of the receptor surface. Common contaminants preventing proper absorbency of the ink onto the substrate surface include silicones and oils. All of these terms describing ink uniformity on the substrate have been taken into account in the following 4-point rating scale:

1 - GOOD - no coalescing of ink noted
2 - FAIR - mud cracking of ink noted
3 - POOR - mottling of ink noted
4 - SEVERE - beading and coalescing of ink noted

Surface Dry Time

Surface dry time represents the amount of time required for the ink surface of the printed substrate to become dry to the touch. It is desirable that the surface dry time be as short as possible.

Total Dry Time

Total dry time represents the amount of time for the ink on the printed substrate to become totally dry, i.e., not easily smudged by finger touch or by rubbing together adjacent printed substrate layers. It is desired that the total dry time be as short as possible.

Examples 1-3 and Comparative Examples C1-C5

Using the Melt Blown Extrusion Procedure, 100 g/m$^2$ nonwoven webs were formed from meltblown PP3505 polypropylene fibers containing the following polymer melt additive(s):

Example 1: 1.0% FC-1
Example 2: 1.0% FC-2 + 1.0% HC-2
Example 3: 0.75% FC-3 + 0.75% HC-1
Comp. Ex. C1: none (control)
Comp. Ex. C2: 1.25% HC-2
Comp. Ex. C3: 6% HC-2
Comp. Ex. C4: 1.25% HC-3
Comp. Ex. C5: 6% HC-3 (silicone surfactant)

The nonwoven webs were fed into a Hewlett Packard HP 855 DeskJet Printer (available from Hewlett Packard Corp., Palo Alto, California) which produces 600 dpi black text and 300 dpi color images. This printer uses two replaceable cartridges from Hewlett Packard, containing dye inks, each containing inks having a relatively high surface tension: an HP51645A cartridge containing black ink and an HP51641A cartridge containing three separate inks, cyan, magenta and yellow. The quality of ink printing was rated according to Bleed, Uniformity, Surface Dry Time and Total Dry Time. Results from these evaluations are presented in TABLE 1.

TABLE 1

| Ex. | FC, % | HC, % | Basis . Weight | Bleed | Uniformity | Surface Dry Tm. | Total Dry Tm. |
|---|---|---|---|---|---|---|---|
| 1 | FC-1, 1% | --- | 100 GSM | 1.0 | 1.0 | 12 min | 37 min |
| 3 | FC-2, 1% | HC-2, 1% | 100 GSM | 1.3 | 1.0 | 17 min | 19 hr |
| 2 | FC-3, 0.75% | HC-1, 0.75% | 100 GSM | 1.0 | 1.0 | 2 min | 2 min |
| C1 | ----- | ---- | 100 GSM | 1.5 | 1.0 | > 24 hr | > 24 hr |

TABLE 1   (continued)

| Ex. | FC, % | HC, % | Basis . Weight | Bleed | Uniformity | Surface Dry Tm. | Total Dry Tm. |
|---|---|---|---|---|---|---|---|
| C2 | ----- | HC-2, 1.25% | 40 GSM | 1.3 | 1.0 | 9 min | > 24 hr |
| C3 | ----- | HC-2, 6% | 40 GSM | 1.5 | 1.0 | 20 min | > 24 hr |
| C4 | ----- | HC-3, 1.25% | 40 GSM | 1.5 | 1.0 | 200 | > 24 hr |
| C5 | ----- | HC-3, 6% | 40 GSM | 1.5 | 1.0 | 5 | > 24 hr |

The data in TABLE 1 show that, with the HP 855 printer, a much faster ink dry time, especially total dry time, resulted when a fluorochemical surfactant or fluorochemical/hydrocarbon surfactant blend was incorporated in the polypropylene fibers, when compared to incorporating a hydrocarbon surfactant, a silicone surfactant, or no surfactant at all.

Comparative Examples C6-C8

Using the Melt Blown Extrusion Procedure, nonwoven webs having a basis weight of 100 g/m$^2$ were formed from meltblown P(EO)6806 poly(ethylene/octene) fibers containing the following polymer melt additive(s):

Comp. Ex. C6: 1.0% FC-1
Comp. Ex. C7: 0.5% FC-3 + 0.5% HC-1
Comp. Ex. C8: none (control)

The nonwoven webs were fed into a Hewlett Packard HP 855 DeskJet Printer containing the same ink cartridges as previously described, and quality of ink printing on each web was rated according to Bleed, Uniformity, Surface Dry Time and Total Dry Time. Results from these evaluations are presented in TABLE 2.

TABLE 2

| Ex. | FC, % | HC, % | Bleed | Uniformity | Surface Dry Tm. | Total Dry Tm. |
|---|---|---|---|---|---|---|
| C6 | FC-1, 1% | --- | 1.0 | 1.0 | 9 min | > 24 hr |
| C7 | FC-3, 0.5% | HC-1, 0.5% | 1.0 | 1.0 | 29 min | > 24 hr |
| C8 | ----- | ----- | 1.5 | 1.0 | 27 min | > 24 hr |

The data in TABLE 2 show that when the HP 855 printer was used to apply ink onto a web made of poly (ethylene/octene) fibers instead of polypropylene fibers, no consistent improvement in bleed, uniformity or dry time resulted when a fluorochemical surfactant was incorporated as a polymer melt additive, either used alone or blended with a hydrocarbon surfactant.

Examples 4-5 and Comparative Examples C9-C11

Using the Melt Blown Extrusion Procedure, 100 g/m$^2$ nonwoven webs were formed from either meltblown PP3505 polypropylene fibers or meltblown PEO6806 poly(ethylene/octene) fibers containing the following polymer melt additive(s):

Example 4: PP3505 + 1.0% FC-1
Example 5: PP3505 + 0.75% FC-3 + 0.75% HC-1

Comp. Ex. C9: PP3505 alone
Comp. Ex. C10: P(EO)6806 + 1% FC-1
Comp. Ex. C 11: P(EO)6806 alone

This time, the nonwoven webs were fed into a Hewlett Packard HP 2000C Professional Series Color Printer (available from Hewlett Packard Corp.), which produces 600 dpi black print quality and 300 dpi color print quality. This printer uses four replaceable cartridges: C4841A Cyan, C4843A Magenta, C4842A Yellow and C4844A Black, available from Hewlett Packard Corp., containing dye-type inks, having a relatively low surface tension (20 picoLiter drops). The quality of ink printing was rated according to Bleed, Uniformity, Surface Dry Time and Total Dry Time. Results from these evaluations are presented in TABLE 3.

TABLE 3

| Ex. | FC, % | HC, % | Polymer | Bleed | Uniformity | Surface Dry Tm. | Total Dry Tm. |
|---|---|---|---|---|---|---|---|
| 4 | FC-1, 1% | --- | PP-3505 | 1.0 | 1.0 | 4.5 min | 80 min |
| 5 | FC-3, 0.75% | HC-1, 0.75% | PP-3505 | 1.0 | 1.0 | 14 min | 135 min |
| C9 | ----- | ----- | PP-3505 | 1.0 | 1.0 | 80 min | > 24 hr |
| C10 | FC-1, 1% | ----- | P(EO)-6806 | 1.0 | 1.0 | 35 min | > 24 hr |
| C11 | ----- | ----- | P(EO)-6806 | 1.0 | 1.0 | 32 min | 270 min |

The data in TABLE 3 show that when the HP 2000C printer was used to apply ink to the polypropylene nonwoven webs, a much faster ink drying time, especially for the ink to totally dry, resulted when the fluorochemical surfactant or fluorochemical/hydrocarbon surfactant blend was incorporated in the polypropylene fibers, when compared to incorporating no surfactant at all. No significant improvement in print quality or dry time was noted when the same fluorochemical surfactant or fluorochemical/hydrocarbon surfactant blend was incorporated in the poly(ethylene/octene) fibers.

Examples 6-7 and ComparativeExamples C12-C14

Using the Melt Blown Extrusion Procedure, 100 g/m$^2$ nonwoven webs were formed from either meltblown PP3505 polypropylene fibers or meltblown PEO6806 poly(ethylene/octene) fibers containing the following polymer melt additive(s):

Example 6: PP3505 + 1.0% FC-1
Example 7: PP3505 + 0.75% FC-3 + 0.75% HC-1
Comp. Ex. C12: PP3505 alone
Comp. Ex. C13: P(EO)6806 + 1% FC-1
Comp. Ex. C14: P(EO)6806 alone

This time, the nonwoven webs were fed into a Hewlett Packard HP DesignJet 2500CP Printer, (available from Hewlett Packard Corp.), which produces 600 dpi color images. This printer uses four replaceable cartridges available from Hewlett Packard Corp. containing DesignJet CP Ink System UV pigment-type inks C1893A Cyan, C1894A Magenta, C1895A Yellow and C1892A Black, each ink having a relatively low surface tension (20 picoLiter drops in eight passes). The quality of ink printing was rated according to Bleed, Uniformity, Surface Dry Time and Total Dry Time. Results from these evaluations are presented in TABLE 4.

TABLE 4

| Ex. | FC, % | HC, % | Polymer | Bleed | Uniformity | Surface Dry Tm. | Totat Dry Tm. |
|---|---|---|---|---|---|---|---|
| 6 | FC-1, 1% | --- | PP-3505 | 1.5 | 1.0 | 1.5 min | 2.5 min |
| 7 | FC-3, 0.75% | HC-1, 0.75% | PP-3505 | 1.5 | 1.0 | 1.75 min | 2.5 min |
| C12 | ----- | ----- | PP-3505 | 1.5 | 1.0 | 2 min | 4 min |
| C13 | FC-1, 1% | ----- | P(EO)-6806 | 1.5 | 1.0 | 1.5 min | 2.5 min |
| C14 | ----- | ----- | P(EO)-6806 | 1.5 | 1.0 | 1 min | 1.5 min |

The data in TABLE 4 show that, using the HP 2500CP printer to apply inks to polypropylene nonwoven webs, a faster surface and total dry time resulted when a fluorochemical surfactant or fluorochemical/hydrocarbon surfactant blend was incorporated in the polypropylene fibers, as compared to when no surfactant was incorporated. Dry times were somewhat lengthened when the same fluorochemical surfactant or fluorochemical/hydrocarbon surfactant blend was incorporated in the poly(ethylene/octene) fibers.

Examples 8-9 and Comparative Example C15

Using the Melt Blown Extrusion Procedure, 100 g/m$^2$ nonwoven webs were formed from meltblown PP3505 polypropylene fibers containing the following polymer melt additive(s):

Example 8: PP3505 + 1.0% FC-1
Example 9: PP3505 + 0.75% FC-3 + 0.75% HC-1
Comp. Ex. C15: PP3505 alone

This time, the nonwoven webs were fed into a wide format ENCAD NOVAJET™ 4 Printer (available from ENCAD Corp., San Diego, California) which produces 300 dpi black and color images. This printer uses four replaceable cartridges available from ENCAD Corp. containing 3M Thermal InkJet pigment-type inks: 8551 Cyan, 8553 Magenta, 8552 Yellow and 8554 Black, each ink having a relatively high surface tension (140 pl drops). The quality of ink printing was rated according to Bleed, Uniformity, Surface Dry Time and Total Dry Time. Results from these evaluations are presented in TABLE 5.

TABLE 5

| Ex. | FC, % | HC, % | Bleed | Uniformity | Surface Dry Tm. | Total Dry Tm. |
|---|---|---|---|---|---|---|
| 8 | FC-1, 1% | --- | 2.0 | 1.0 | 3 min | 8 min |
| 9 | FC-3, 0.75% | HC-1, 0.75% | 2.0 | 1.0 | 8 min | 14 min |
| C15 | ----- | ----- | 1.5 | 1.0 | 20 min | between 4 and 18 hrs |

The data in TABLE 5 show that, using an ENCAD NOVAJET 4 printer to apply ink to nonwoven webs, a considerably faster time for the ink to surface dry and become totally dry resulted when a fluorochemical surfactant or fluorochemical/hydrocarbon surfactant blend was incorporated in the polypropylene fibers, as compared to when no surfactant was incorporated.

Examples 10-11 and Comparative Examples C16-C17

Using the Microporous Film Preparation Procedure, microporous films were formed from 5D45 polypropylene containing the following polymer melt additive(s):

Example 10: 5D45 + 1.2% FC-4
Example 11: 5D45 + 0.5% FC-4 + 0.5% HC-2
Comp. Ex. C16: 5D45 + 0.6% HC-2
Comp. Ex. C17: 5D45 alone

The microporous films were printed with a Hewlett Packard HP DesignJet 2500CP Printer having the same ink cartridges as previously described. The quality of ink printing was rated according to Bleed, Uniformity, Surface Dry Time and Total Dry Time. Results from these evaluations are presented in TABLE 6.

TABLE 6

| Ex. | FC, % | HC, % | Bleed | Uniformity | Surf. Dry Tm. | Total Dry Tm. |
|---|---|---|---|---|---|---|
| 10 | FC-4, 1.2% | --- | 1.5 | 1.0 | instant | instant |
| 11 | FC-4, 0.5% | HC-2, 0.5% | 1.0 | 1.0 | instant | instant |
| C16 | ----- | HC-2, 0.6% | 3.0 | 1.5 | 5 min | > 24 hr |
| C17 | ----- | ----- | 2.0 | 1.5 | instant | instant |

The data in TABLE 6 show that, when using an HP 2500CP printer to apply ink to polypropylene microporous film, the dry time for the ink is instantaneous for the films containing FC-4 fluorochemical surfactant, either alone or in combination with HC-2 hydrocarbon surfactant, as compared to the very long dry times noted when HC-2 was used alone as a polymer melt additive.
Also, better image quality resulted with the fluorochemical surfactant-containing films. Additionally, it was noted that incorporating higher levels of hydrocarbon surfactant into the polymer in an effort to improve ink performance resulted in poor quality films which were too fragile for the print test.

Examples 12-15 and Comparative Examples C18-C21

The films made for Examples 10-11 and Comparative Examples C16-C17 were evaluated with two other printers: the ENCAD™ NOVAJET 4 and the ENCAD™ NOVAJET PRO. The ENCAD™ NOVAJET PRO printer contained a high surface tension dye-type ink. The quality of ink printing was rated according to Bleed, Uniformity, Surface Dry Time and Total Dry Time. Results from these evaluations are presented in TABLE 7.

TABLE 7

| Ex. | FC, % | HC, % | Printer | Bleed | Uniformity | Surf. Dry Tm. | Total Dry Tm. |
|---|---|---|---|---|---|---|---|
| 12 | FC-4, 1.2% | --- | NOVAJET 4 | 1.0 | 2.0 | 20 min | > 24 hr |
| 13 | FC-4, 0.5% | HC-2, 0.5% | NOVAJET 4 | 1.0 | 2.0 | 10 min | > 24 hr |
| C18 | ----- | HC-2, 0.6% | NOVAJET 4 | 2.0 | 4.0 | 45 min | > 24 hr |
| C19 | ----- | ----- | NOVAJET 4 | 1.0 | 4.0 | > 24 hr | > 24 hr |
| 14 | FC-4, 1.2% | ----- | NOVAJET 4 | 1.5 | 1.5 | instant | instant |

TABLE 7   (continued)

| Ex. | FC, % | HC, % | Printer | Bleed | Uniformity | Surf. Dry Tm. | Total Dry Tm. |
|---|---|---|---|---|---|---|---|
| 15 | FC-4, 0.5% | HC-2, 0.5% | NOVAJET 4 | 1.5 | 1.5 | instant | instant |
| C20 | ----- | HC-2, 0.6% | NOVAJET 4 | 1.5 | 2.0 | 3 min | > 24 hr |
| C21 | ----- | ----- | NOVAJET 4 | 1.5 | 4.0 | > 24 hr | > 24 hr |

The data in TABLE 7 show that, when ink is applied to the microporous film with the NOVAJET 4 printer, a general improvement in ink bleed, uniformity and surface drying time when a fluorochemical surfactant was employed as a polymer melt additive, either alone or in conjunction with a hydrocarbon surfactant. Using the Novajet Pro printer, a striking reduction in ink drying times was noted when employing a fluorochemical surfactant as a polymer melt additive.

**Claims**

1.   Method of printing a substrate comprising the steps of:

providing a substrate selected from the group consisting of (i) a non-woven web comprising fibers of olefinic thermoplastic polymer having dispersed therein a non-ionic fluorochemical surfactant and (ii) a microporous film comprising a layer of olefinic thermoplastic polymer having dispersed therein a non-ionic fluorochemical surfactant and;
image-wise applying ink to said substrate,

and said olefinic thermoplastic polymer being a polymer consisting of repeating units derived from alpha olefins having 2 to 4 carbon atoms.

2.   Method according to claim 1 wherein said olefinic thermoplastic polymer is polypropylene.

3.   Method according to claim 1 wherein said non-ionic fluorochemical surfactant corresponds to the following formula:

$$(R_f)_n\text{-}Q\text{-}(Z)_m \qquad\qquad (I)$$

wherein:

each $R_f$ may be the same or different and represents a fluoroaliphatic group having at least 3 fully-fluorinated carbon atoms;
Q is a multivalent linking group, or is a covalent bond;
each Z may be the same or different and represents a nonionic, water-solubilizing group comprising a poly(oxyalkylene) group; and
n and m independently represent a number from 1 to 6.

4.   Method according to claim 1 wherein said non-ionic fluorochemical surfactant correspond to the following formula:

$$R_f\text{-}L\text{-}G\text{-}X\text{-}T \qquad\qquad (II)$$

wherein $R_f$ represents a fluoroaliphatic group having at least 3 fully-fluorinated carbon atoms, L is a linking group or a covalent bond, G is a water solubilizing poly(oxyalkylene) group, X is oxygen or NR with R representing hydrogen or an alkyl or aryl group, and T is hydrogen or an organic group.

**5.** Method according to claim 1 wherein said ink is a water based ink.

**6.** Method according to claim 1 wherein said layer of olefinic thermoplastic polymer or said olefinic thermoplastic polymer fibers further comprises a non-ionic non-fluorochemical polyoxyalkylene surfactant.

**7.** Method according to claim 1 wherein the image-wise application of ink proceeds via inkjet printing.

**8.** Microporous film comprising a layer of olefinic thermoplastic polymer having dispersed therein a non-ionic fluorochemical surfactant wherein the olefinic thermoplastic polymer is a polymer consisting of repeating units derived from alpha olefins having 2 to 4 carbon atoms.

**9.** Microporous film according to claim 8 wherein said olefinic thermoplastic polymer is polypropylene.

**10.** Microporous film according to claim 8 wherein said non-ionic fluorochemical surfactant corresponds to the following formula:

$$(R_f)_n\text{-}Q\text{-}(Z)_m \qquad \text{(I)}$$

wherein:

each $R_f$ may be the same or different and represents a fluoroaliphatic group having at least 3 fully-fluorinated carbon atoms;
Q is a multivalent linking group, or is a covalent bond;
each Z may be the same or different and represents a nonionic, water-solubilizing group comprising a poly(oxyalkylene) group; and
n and m independently represent a number from 1 to 6.

**11.** Microporous film according to claim 8 wherein said non-ionic fluorochemical surfactant correspond to the following formula:

$$R_f\text{-}L\text{-}G\text{-}X\text{-}T \qquad \text{(II)}$$

wherein $R_f$ represents a a fluoroaliphatic group having at least 3 fully-fluorinated carbon atoms, L is a linking group or a covalent bond, G is a water solubilizing poly(oxyalkylene) group, X is oxygen or NR with R representing hydrogen or an alkyl or aryl group, and T is hydrogen or an organic group. ,

**12.** Microporous film according to claim 8 printed on at least part of at least one of its major surfaces with a image pattern of ink.

**13.** Microporous film according to claim 12 wherein said ink is a water based ink.

**14.** Microporous film according to claim 8 wherein said layer of olefinic thermoplastic polymer further comprises a non-ionic non-fluorochemical polyoxyalkylene surfactant.


**Patentansprüche**

**1.** Verfahren zum Bedrucken eines Substrats, bei dem man:

ein Substrat aus der Gruppe bestehend aus (i) einem Fasern aus olefinischem thermoplastischem Polymer mit einem darin dispergierten nichtionischen fluorhaltigen Tensid enthaltenden Vlies und (ii) einer mikroporösen Folie mit einer Schicht aus olefinischem thermoplastischem Polymer mit einem darin dispergierten nichtionischen fluorhaltigen Tensid bereitstellt und

auf das Substrat bildmäßig Tinte aufbringt,

und wobei es sich bei dem olefinischen thermoplastischen Polymer um ein Polymer aus von alpha-Olefinen mit 2 bis 4 Kohlenstoffatomen abgeleiteten wiederkehrenden Einheiten handelt.

2. Verfahren nach Anspruch 1, bei dem es sich bei dem olefinischen thermoplastischen Polymer um Polypropylen handelt.

3. Verfahren nach Anspruch 1, bei dem das nichtionische fluorhaltige Tensid der folgenden Formel entspricht:

$$(R_f)_n\text{-}Q\text{-}(Z)_m \tag{I}$$

worin:

$R_f$ jeweils gleich oder verschieden sein kann und für eine fluoraliphatische Gruppe mit mindestens 3 vollfluorierten Kohlenstoffatomen steht;
Q für eine mehrwertige Verknüpfungsgruppe oder eine kovalente Bindung steht;
Z jeweils gleich oder verschieden sein kann und für eine nichtionische, wasserlöslichmachende Gruppe mit einer Poly(oxyalkylen)gruppe steht und
n und m unabhängig voneinander für eine Zahl von 1 bis 6 stehen.

4. Verfahren nach Anspruch 1, bei dem das nichtionische fluorhaltige Tensid der folgenden Formel entspricht:

$$R_f\text{-}L\text{-}G\text{-}X\text{-}T \tag{II}$$

worin:

$R_f$ für eine fluoraliphatische Gruppe mit mindestens 3 vollfluorierten Kohlenstoffatomen steht, L für eine Verknüpfungsgruppe oder eine kovalente Bindung steht, G für eine wasserlöslichmachende Poly(oxyalkylen) gruppe steht, X für Sauerstoff oder NR, wobei R Wasserstoff oder eine Alkyl- oder Arylgruppe bedeutet, steht und T für Wasserstoff oder eine organische Gruppe steht.

5. Verfahren nach Anspruch 1, bei dem es sich bei der Tinte um eine wäßrige Tinte handelt.

6. Verfahren nach Anspruch 1, bei dem die Schicht aus olefinischem thermoplastischem Polymer bzw. die Fasern aus olefinischem thermoplastischem Polymer ferner ein nichtionisches, nicht fluorhaltiges Polyoxyalkylentensid enthält bzw. enthalten.

7. Verfahren nach Anspruch 1, bei dem das bildmäßige Aufbringen von Tinte mittels Tintenstrahldruck erfolgt .

8. Mikroporöse Folie, mit einer Schicht aus olefinischem thermoplastischem Polymer mit einem darin dispergierten nichtionischen fluorhaltigen Tensid, bei der es sich bei dem olefinischen thermoplastischen Polymer um ein Polymer aus von alpha-Olefinen mit 2 bis 4 Kohlenstoffatomen abgeleiteten wiederkehrenden Einheiten handelt.

9. Mikroporöse Folie, bei der es sich bei dem olefinischen thermoplastischen Polymer um Polypropylen handelt.

10. Mikroporöse Folie nach Anspruch 8, bei der das nichtionische fluorhaltige Tensid der folgenden Formel entspricht:

$$(R_f)_n\text{-}Q\text{-}(Z)_m \tag{I}$$

worin:

$R_f$ jeweils gleich oder verschieden sein kann und für eine fluoraliphatische Gruppe mit mindestens 3 vollfluorierten Kohlenstoffatomen steht;
Q für eine mehrwertige Verknüpfungsgruppe oder eine kovalente Bindung steht;
Z jeweils gleich oder verschieden sein kann und für eine nichtionische, wasserlöslichmachende Gruppe mit einer Poly(oxyalkylen)gruppe steht und
n und m unabhängig voneinander für eine Zahl von 1 bis 6 stehen.

**11.** Mikroporöse Folie nach Anspruch 8, bei der das nichtionische fluorhaltige Tensid der folgenden Formel entspricht:

$$R_f\text{-L-G-X-T} \hspace{4cm} (II)$$

worin:

$R_f$ für eine fluoraliphatische Gruppe mit mindestens 3 vollfluorierten Kohlenstoffatomen steht, L für eine Verknüpfungsgruppe oder eine kovalente Bindung steht, G für eine wasserlöslichmachende Poly(oxyalkylen)gruppe steht, X für Sauerstoff oder NR, wobei R Wasserstoff oder eine Alkyl- oder Arylgruppe bedeutet, steht und T für Wasserstoff oder eine organische Gruppe steht.

**12.** Mikroporöse Folie nach Anspruch 8, bei der mindestens ein Teil mindestens einer ihrer Hauptoberflächen mit einem Bildmuster aus Tinte bedruckt ist.

**13.** Mikroporöse Folie nach Anspruch 12, bei der es sich bei der Tinte um eine wäßrige Tinte handelt.

**14.** Mikroporöse Folie nach Anspruch 8, bei der die Schicht aus olefinischem thermoplastischem Polymer ferner ein nichtionisches, nicht fluorhaltiges Polyoxyalkylentensid enthält

**Revendications**

**1.** Méthode d'impression d'un substrat comprenant les étapes consistant à :

fournir un substrat sélectionné dans le groupe constitué de (i) une bande en non tissé comprenant des fibres de polymère thermoplastique oléfinique dans lequel est dispersé un composé fluoré tensioactif non ionique et (ii) un film microporeux comprenant une couche de polymère thermoplastique oléfinique dans lequel est dispersé un composé fluoré tensioactif non ionique et ;
appliquer l'encre image par image sur ledit substrat,

et ledit polymère thermoplastique oléfinique étant un polymère constitué d'unités structurales dérivées d'alpha-oléfines possédant de 2 à 4 atomes de carbone.

**2.** Méthode selon la revendication 1 dans laquelle ledit polymère thermoplastique oléfinique est le polypropylène.

**3.** Méthode selon la revendication 1 dans laquelle ledit composé fluoré tensioactif non ionique correspond à la formule ci-après :

$$(R_f)_n\text{-Q-}(Z)_m \hspace{4cm} (I)$$

dans laquelle :

chaque $R_f$ peut être identique ou différent et représente un groupe fluoroaliphatique possédant au moins 3 atomes de carbone entièrement fluorés ;
Q est un groupe de liaison multivalent, ou est une liaison covalente ;
chaque Z peut être identique ou différent et représente un groupe d'hydrosolubilisation non ionique comprenant un groupe poly(oxyalkylène) ; et
n et m représentent indépendamment un nombre de 1 à 6.

**4.** Méthode selon la revendication 1 dans laquelle ledit composé fluoré tensioactif non ionique correspond à la formule ci-après :

$$R_f\text{-L-G-X-T} \qquad\qquad (II)$$

dans laquelle $R_f$ représente un groupe fluoroaliphatique possédant au moins 3 atomes de carbone entièrement fluorés, L est un groupe de liaison ou une liaison covalente, G est un groupe poly(oxyalkylène) d'hydrosolubilisation, X est l'oxygène ou NR, R représentant l'hydrogène ou un groupe alkyle ou aryle, et T est l'hydrogène ou un groupe organique.

**5.** Méthode selon la revendication 1 dans laquelle ladite encre est une encre à l'eau.

**6.** Méthode selon la revendication 1 dans laquelle ladite couche de polymère thermoplastique oléfinique ou lesdites fibres de polymère thermoplastique oléfinique comprennent en outre un polyoxyalkylène tensioactif non ionique qui n'est pas un composé fluoré.

**7.** Méthode selon la revendication 1 dans laquelle l'application image par image de l'encre a lieu par impression à jet d'encre.

**8.** Film microporeux comprenant une couche de polymère thermoplastique oléfinique dans lequel est dispersé un composé fluoré tensioactif non ionique, dans lequel le polymère thermoplastique oléfinique est un polymère constitué d'unités structurales dérivées d'alpha-oléfines possédant de 2 à 4 atomes de carbone.

**9.** Film microporeux selon la revendication 8 dans lequel ledit polymère thermoplastique oléfinique est le polypropylène.

**10.** Film microporeux selon la revendication 8 dans lequel ledit composé fluoré tensioactif non ionique correspond à la formule ci-après :

$$(R_f)_n\text{-Q-(Z)}_m \qquad\qquad (I)$$

dans laquelle :

chaque $R_f$ peut être identique ou différent et représente un groupe fluoroaliphatique possédant au moins 3 atomes de carbone entièrement fluorés ;
Q est un groupe de liaison multivalent, ou est une liaison covalente ;
chaque Z peut être identique ou différent et représente un groupe d'hydrosolubilisation non ionique comprenant un groupe poly(oxyalkylène) ; et
n et m représentent indépendamment un nombre de 1 à 6.

**11.** Film microporeux selon la revendication 8 dans lequel ledit composé fluoré tensioactif non ionique correspond à la formule ci-après :

$$R_f\text{-L-G-X-T} \qquad\qquad (II)$$

dans laquelle $R_f$ représente un groupe fluoroaliphatique possédant au moins 3 atomes de carbone entièrement fluorés, L est un groupe de liaison ou une liaison covalente, G est un groupe poly(oxyalkylène) d'hydrosolubilisation, X est l'oxygène ou NR, R représentant l'hydrogène ou un groupe alkyle ou aryle, et T est l'hydrogène ou un groupe organique.

**12.** Film microporeux selon la revendication 8 sur lequel est imprimée, sur au moins une partie d'au moins une de ses surfaces principales, une représentation à l'encre d'une image.

**13.** Film microporeux selon la revendication 12 dans lequel ladite encre est une encre à l'eau.

**14.** Film microporeux selon la revendication 8 dans lequel ladite couche de polymère thermoplastique oléfinique comprend en outre un polyoxyalkylène tensioactif non ionique qui n'est pas un composé fluoré.